# EUROPEAN PATENT SPECIFICATION

(11) **EP 2 909 240 B1**
(45) Date of publication and mention of the grant of the patent: **14.09.2016**
(21) Application number: 12794523.6
(22) Date of filing: 22.10.2012
(51) Int. Cl.: C08C 19/08, C08K 5/17, C08K 5/20, C08K 5/205, C08K 5/21

(54) **DEVULCANIZING AGENT FOR PRODUCTION OF RECLAIM RUBBER POWDER**
DEVULKANISIERUNGSMITTEL FÜR DIE HERSTELLUNG VON ALTGUMMIMEHL
AGENT DE DÉVULCANISATION POUR LA PRODUCTION DE POUDRE DE CAOUTCHOUC DE RÉCUPÉRATION

(30) Priority: 18.10.2012 LT 2012093
(43) Date of publication of application: 26.08.2015
(73) Proprietor: UAB Devulco, 07150 Vilnius (LT)
(72) Inventor: ASADAUSKAS, Svajus, Willowbrook, Illinois 60527 (US); JUKNA, Arturas, LT-11111 Vilnius (LT)
(74) Representative: Pranevicius, Gediminas
(86) International application number: PCT/LT2012/000005
(87) International publication number: WO 2014/062043

(56) References cited:
- WO-A1-2008/007384
- US-A- 4 161 464
- US-A1- 2008 287 558

## Description

### FIELD OF THE INVENTION

The present invention relates to recovery of solid rubber from waste and particularly to compositions for devulcanization of rubber.

### BACKGROUND OF THE INVENTION

Numerous technologies have been proposed for the waste rubber recycling, but none of them is implemented on a large scale. Research of reclaiming rubber from waste tires and other rubber goods has been carried out for many decades (Contactor's Report to the Board "Evaluation of Waste Tire De-vulcanization Technologies" Produced under contract by "Cal Recovery" Inc., 2004). Various methods were developed for disrupting S-S and S-C bonds, which serve as crosslinks between polymer chains: mechanical (A. A. Phadke, A. K. Bhattacharya, S.K. Chakraborty and S. K. De, "Rubber Chemical Technologies" vol. 56, pg. 726, (1983)); cryomechanical (B. Klingensmith, "Rubber World" vol. 203, pg. 16, (1991)); microwave (US Patent 4,104,205 by Novotny (1978); and C. H. Scuracchio, D. A. Waki and M. L.C. P. Silva, "Journal of Thermal Analytical Calorimetry" vol. 87, pg. 893 (2007)); ultrasonic (US Patent 3,725,314 by Pelofsky (1973); and A. I. Isayev, J. Chen and A. Tukachinsky, "Rubber Chemical Technology" vol. 68, pg. 267 (1995)); chemical (including thermal and thermochemical); microbiological (including biochemical) and others. Sulfur crosslinks are formed during rubber vulcanization, leading to the buildup of a strongly-bound three dimensional molecular network throughout the whole volume of the vulcanized item. Such a crosslinking network prevents the vulcanized rubber from being melted or homogeneously mixed. Therefore, devulcanization methods are used to at least partially destroy the crosslinking network.

In molecular terms, the primary target of devulcanization are S-S and S-C bonds. Hydrocarbon bonds, i.e. C=C and C-C can also be disrupted in order to destroy the network, however, this reduces the polymer chain length and becomes much more detrimental to technical properties. Under favorable conditions, the devulcanization process essentially breaks up the polymer network through S-S and S-C crosslinks into fragments, which can blend with additives and virgin rubber, as well as among themselves. Consequently, with various degrees of success the devulcanized rubber can be incorporated into a new polymer matrix, such as virgin rubber, and, if necessary, crosslinked again, i.e. re-vulcanized. Usually, with the larger polymer network fragments of devulcanized rubber used as formulation component, the integrity of the newly blended polymer matrix becomes poorer, which leads to detrimental changes in technical parameters. Tensile strength and elongation at break are the most sensitive to the problematic integrity of the polymer matrix. In a mixture of reclaim rubber with other polymers and additives, poor fragmentation of devulcanized crosslinked network leads to non-homogeneities and loss of tensile strength. Therefore, during devulcanization it is desirable to disrupt as many as possible S-S and S-C bonds. Since the media, which is being devulcanized, is always solid, the degree of devulcanization is higher on the surface of the solid than deeper into the substrate. Consequently, finer particles and better fragmentation of polymer matrix assure more uniform integration of the reclaim rubber into a new formulation.

Surprisingly, little attention has been devoted for controlling particle sizes of the reclaim rubber. Most manufacture processes produce reclaim rubber in sheets or layers, which are later stacked onto each other and compressed into a bale, rod, board or other bulk format. This gives the reclaim rubber a resemblance to packaged virgin natural rubber, which is usually also supplied as bales or similar. Virgin rubbers, such as natural, isoprene, Styrene-Butadiene Rubber (SBR) and all others, cannot be supplied as powders because of two main reasons: 1) it is very hard to produce a small-size particle of virgin rubber due to highly elastic and self-healing nature of such a solid, unless deep freezing is used; 2) even if small particles of virgin rubber are produced, they easily stick to each other at ambient or higher temperatures and again become hard to separate. Therefore, great engineering effort is usually dedicated to design the equipment for rubber manufacturing, which is able to handle large solid pieces of rubber effectively. Other rubber components, such as carbon black, sulfur, ZnO, stearic acid, etc. typically are used as powders, sometimes as liquids, e.g. mineral oil plasticizers. Powders can be mixed, dispersed, and generally processed much easier, as compared to large pieces or rubber.

In addition to above problems, processing of waste rubber presents other operational challenges. Often relatively high temperatures of ∼200°C, elevated pressures (e.g. 5 bar) and long durations are necessary for devulcanization of waste rubber. This makes the process exceedingly energy-consuming and cost prohibitive. Expensive equipment is necessary in microwave, ultrasonic and cryomechanical devulcanization methods. As a result, maintenance and depreciation become excessively costly. Therefore, majority of the waste rubber is ground and either utilized as a low cost component in less-demanding rubber articles (tiles, pavement coatings, construction dampers, roof shingles, etc.) or simply burned as a fuel supplement.

Mechano-chemical process, which applies mechanical force to the rubber along with the addition of devulcanizing agents, has been shown to be a more efficient approach (G. K. Jana and C. K. Das, "Macromolecular Research" vol. 13, pg. 30 (2005)). It combines the simplicity of mechanical compression of the rubber with the ability to impart chemically-driven devulcanization. The variety of devulcanizing agents for this type of processing is rather large and still unsettled in the industry. The agents, containing two, three or more components, are produced by several manufacturers. "Green Rubber" company (Malaysia) produces the agent "DeLink" as a powder or granules for devulcanizing waster rubber. Similar products are manufactured by Rhein Chemie GmbH (Germany) under a tradename Aktiplast GE 1979 and Qingdao "Toplit Industry Co." (China) under a tradename "Toplit". The compositions of DeLink and Actiplast are not disclosed, while Toplit reports that its agent contains 1.5% wt. elemental S and 8% total S.

Scientific journals also describe utilization of devulcanizing agents in rubber processing (G. K. Jana and C. K. Das, "Macromolecular Research" vol. 13, pg. 30, 2005). Thiosalycilic acid and diphenyl disulfide are investigated by S. Poompradub et al. (P. Thaicharoen, P. Thamyongkit and S. Poompradub, "Korean Journal of Chemical Engineering" vol. 27, pp. 1177 - 1183, 2010). A mixture of ground waste rubber and the agent was heated for 30 min at 140°C in process oil. The experiment produced reclaim rubber with pronounced solubility (from 1% to 24% sol. fr.) and reduced crosslink density (from 147 to 54 mol/m³). In this method rubber must be mixed with oil, which subsequently requires cleanup for both spent oil and produced reclaim rubber. Also, the energy demand for heating is very significant. These issues seriously jeopardize the commercial viability of such approach.

Patent literature describes several devulcanizing agents. Devulcanization method for automobile tires and industrial rubber waste is described in US Patent 6,831,109 by Beirakh along with the devulcanizing agent, which contains two components. The first component may include urea and its alkyl / aryl derivatives (e.g. diphenyl urea, methyl urea), the second may include dicarboxylic acids (e.g. adipic acid, sebacic acid). The inventors declare that this agent leads to sufficiently complete destruction of S-S bonds due to organic cation formation from urea derivatives, while dicarboxylic acid acts as a reaction promoter. The devulcanization method is based on mechanical mixing of waste rubber with the agent and does not require any heating or cleanup. However, this approach has several problems. The reaction process is relatively long, leading to slow flowrates. The organic cation formation reactions release volatile byproducts, which lead to poor workmanship. The devulcanizing agent represents soft powder, which increases sliding of the waste rubber particles against the mechanical surfaces. This results in long mixing durations and higher energy consumption for processing. Most importantly, the reclaim rubber is produced as a compressed sheet, which is much more devulcanized on the surface than in the bulk. Therefore, its ability to blend with virgin rubber is problematic and significant engineering effort is necessary to process such item as a raw material for rubber manufacturing.

The closest technical solution is described in US 5,770,632, where a devulcanizing agent with at least two components is disclosed. Zn salts of thiocarbamate or dithiophosphate represent the first component, while the second component is selected from 2-mercaptobenzothiazoles, thiurams, guanidines, thiomorpholines, sulphenamides or their derivatives. ZnO catalysts can be added as well. The patent provides some flexibility in choosing the additives, but most of them lead to excessive sliding of waste rubber particles during processing. Ash content of reclaim rubber increases significantly, because Zn salts are key components of the devulcanizing agent. Produced reclaim rubber represents a compressed sheet also, which is again difficult to process as a raw material for tire manufacture. Another patent US 6,387,966 by Goldstein et al describes a devulcanizing agent with up to five types of components, which also include proton donor and acid. Both this patent and a patent application US 2011/0152390 by Beirakh make provisions for a friction modifier. However, in both inventions these additives serve the sole purpose to ensure better abrasion between the metal surface and rubber. Such additive type does not increase the area of shearing surfaces and does not assure any control of mechanical shear within the polymer matrix. As a consequence, the processes, described in these inventions, produce a compressed sheet rather than the fine powder from reclaimed rubber.

A variety of devulcanizing agent compositions is disclosed in other patents. They employ more different chemical approaches and appear more distant in processing conditions from room-temperature compression/shearing, exercised by this embodiment. For relating the prior art to this invention, further discussion of such devulcanizing agent compositions is not necessary.

### SUMMARY OF THE INVENTION

The present invention addresses the ongoing problems of waste rubber devulcanization. The composition of a devulcanized agent is disclosed for recycling of used tires and other types of waste elastomers, which results in a series of advantages for production of reclaim rubber. Due to tribologic effects during processing the average size of reclaim particles is easily reduced to less than 0.5 mm and inorganic nature of some devulcanizing agent ingredients prevents the reclaim particles from sticking. Obtained reclaim rubber powder can be processed very easily in rubber manufacture, while processing of virgin rubber, which is usually supplied in large solid pieces, presents many technological challenges. Devulcanization processes make the reclaim rubber powder at least partially suitable as natural rubber substituent due to improved tensile strength, elongation and other parameters at the same time making the mixing and manufacturing with the powder much more effective compared to the bales of virgin rubber.

The agent usually contains two types of constituents, typically Reactant and Anti-Stick additives, as well as supplemental chemicals. Reactant molecules penetrate the rubber matrix and destabilize S-S and S-C bonds, which leads to their delocalization and destruction of crosslinks between the polymer chains. These ashless components are selected from organic compounds, which contain carbonyl and amine or amide functional groups. Specifically, amino acids, carbamates, isocyanurates, carboxylic acid amides and similar can be utilized as Reactant additives.

Document US-A-2008/0287558 describes a compound (I) containing a carbonyl and an amine functional group and having the general structure M-(O-[CO-(CH₂)ₓ-NH]_{y}-SO₂-NH₂)_{z} used for the de-vulcanization of waste rubber, wherein M is H or metal such as Ca, Mg, Na or K. The de-vulcanization process includes homogenizing the waste rubber in the form of crumbs or powder at ambient temperature with the organic compound (I) together with the addition of extenders used in the rubber-making industry and subjecting the blend to de-vulcanization at 40-100°C for 10 to 60 minutes.

Document US-A-4161464 discloses a process for de-vulcanising scrap rubber by contacting particles of scrap rubber with an organic solvent solution of an organic onium salt of nitrogen, phosphorus or sulphur in organic solvent and aqueous solution containing hydroxide ions.

Document WO-A-2008/007384 relates to a process for de-polymerizing rubber waste, plastic waste including polyvinyl chloride by heating broken plastic or rubber waste with a catalyst and an additive agent in closed reactor to below 450°C. The catalyst comprises at least one compound chosen from metal oxides and metal silicates. The agent comprises at least one ammonium compound, at least one sulfate compound and at least one nitrate compound. The ammonium compound is selected from ammonium sulfate, ammonium nitrate, ammonium acetate, ammonium carbonate, ammonium phosphate, ammonium formate.

Anti-Stick material serves as an ashless, solid, preferably inorganic crystalline filler, whose role is to promote the deformational tensions between rubber polymers during the mechanical action in processing and coat the fragmented rubber particles in order to inhibit their sticking. The presence of such crystals increases the area of shearing surfaces and contributes to deformational stresses in the polymer matrix. The inorganic nature of Anti-Stick additives results in higher friction, which also aids the diffusion of Reactant molecules. Consequently, less stable S-S and S-C bonds break easier than C-C or C=C bonds, effectively improving the rate of devulcanization. Anti-Stick components are selected from ashless inorganic salts, namely ammonium hydrocarbonate, hydrazonium sulfate, ammonium sulfite and similar. In case the Reactant also forms hard solid crystals, Anti-Stick component may not be necessary.

The ratio of Reactant vs Anti-Stick additives in the agent is set from 5:1 to 1:5. Supplemental additives might also be added to the agent, such as pre-vulcanization inhibitors, abrasives, antioxidants, etc. For best performance in reclaim rubber powder manufacturing, the treat rate of the devulcanizing agent should comprise from 1% up to 8% wt. of the rubber weight.

### DETAILED DESCRIPTION OF PREFERRED EMBODIMENTS

In preferred embodiments of this invention, a mixture of chemicals is utilized to perform the devulcanization and size reduction of waste rubber particles. As a starting raw material to be processed, outer layers of tires, known as tread, are preferred. Tread rubber is supplied as buffings, i.e. in a form of crumbs, chips, strings, flakes and similar. Their sizes range from less than 0.2 mm to 50 mm or larger, aspect ratios also vary broadly. The size of raw material particles is not a significant problem as long as the intake openings are not obstructed in the equipment, primarily in the mechanical shear device, because the particle size is reduced during processing. Other types of waste rubber can also be processed, such as tire sidewalls, tire interiors, inner tubes, tractor tires, shoe soles, rubber mats and similar. The utilization of other sulfur-cured elastomers as raw materials is also possible.

The waste rubber must be mixed with the devulcanizing agent to produce a uniform distribution of chemicals throughout the volume of the intake material. The devulcanizing agent can be introduced as granules, chips, powder, with some of its components possibly being semisolid or other state, including liquid, as long as the mixing is carried out until the agent is evenly dispersed in the waste rubber particles. The mixture is loaded into a mechanical shear device at the flowrate, designed for the equipment. Various mechanical shear devices can be used for the devulcanization, such as mills, calenders, extruders, rolls, high shear mixers, etc. As a result, incoming particles are crushed and the chemicals from devulcanizing agent penetrate through their surfaces. Exerted mechanical shear accelerates diffusion of the chemicals into the polymer matrix, especially when the particles are not allowed to easily slide over the meshing surfaces.

The preferred composition of the devulcanizing agent involves two main types of ingredients: 1) Reactants and 2) Anti-Stick additives, although supplemental materials can also be used. The role of Reactants is to diffuse into the polymer matrix and delocalize / disrupt S-S and S-C bonds. Several chemical mechanisms are known to produce this effect, such as free radical mechanism, organic cation formation, thermal rearrangement, acid-base reactions, etc. In this embodiment the preferred Reactant additives are organic compounds, which contain carbonyl and amine or amide functional groups , in particular amino acids, carbamates, isocyanurates, carboxylic acid amides and their derivatives. Amino acids are known to participate in acid-base reactions as well as organic cation formation, involving their carbonyl / carboxyl groups along with the amino group. Many of amino acids, such as glycine, alanine, proline, beta-alanine and others retain relatively compact molecular size, which is helpful for penetrating the polymer matrix. Combination of amino acids with the residual additives, which are present in waste rubber after its manufacture, can create a broad variety of possibilities for free radical reactions as well as S-S crosslink rearrangements. In case of waste rubber it is not reasonable to expect that the devulcanization agent chemicals and S-S / S-C crosslinks will be the only reacting species. Amounts of residual additives, such as catalysts (ZnO), vulcanization activators and inhibitors, which are capable of actively interacting with S-S / S-C bonds, typically reach 5% w/w in waste tires. Most often amounts of residual additives are higher than the amount of the devulcanizing agent itself, therefore, free radical and thermal rearrangement mechanisms cannot be disregarded during the devulcanization process.

Many similar chemicals can also induce devulcanization. Presence of carbonyl and-NH- functional groups in carbamates, such as urethane or methyl carbamate, also creates favorable conditions for organic cation and acid-base reactions. Isocyanuric acid and its derivatives is another example of compounds, containing carbonyl and amino groups, which are able to step into organic cation and acid-base reactions. Due to the presence of carbonyl and -NH- functional groups, short chain carboxylic acid amides, such as formamide, acetamide, acrylamide and similar, are particularly effective in penetrating the polymer matrix and engaging in aforementioned reactions. Ultimately, the interactions of carbonyl and amine or amide groups in these compounds as well as residual additives with S-S and S-C bonds leads to delocalization and disruption of crosslinks between the polymer chains as long as the sufficient amounts of Reactants are delivered into the polymer matrix by penetration and diffusion.

In a form of hard crystalline solids, the Anti-Stick additives are needed to assure the proper distribution of mechanical shear in the flow of processed rubber through the meshing surfaces. On their own, the rubber particles, being flexible and elastic, change their shape in a manner, which minimizes deformational tensions. Due to such elasticity, stresses between the polymer chains increase only slightly despite mechanical shear. Even more, upon high pressure some rubber components are released, which lubricate the equipment surface and allow the rubber particles to slide. As a matter of fact, nearly half of rubber components are used in lubricant industry for friction reduction: graphite (major constituent of carbon black) is used for greases, plasticizers are used as mineral oils, stearates are used as antiwear agents, sulfur is used as lubricity additive, etc. Consequently, when waste rubber alone is being processed, a compressed sheet is formed, rather than fragmented particles even in the presence of apparent shear forces. Excessive deformation energy heats the rubber and makes the rubber particles stick among themselves as well as to the equipment surfaces, eventually halting the operation.

When crystalline material is mixed into the flow of incoming waste rubber, upon mechanical shear the deformation of the polymer matrix becomes much more pronounced. The crystals are harder and much less elastic than the particles, so the polymer chains must change their conformations in order to accommodate the presence of the solid foreign bodies. This leads to changing distances between polymer chains and increase in crosslink tensions. The former facilitates the penetration and diffusion of Reactants, while the latter makes it easier to delocalize S-S and S-C bonds. Such synergy is further enhanced by the fact that inorganic crystals usually are not good lubricants and do not allow formation of oily films on the meshing surfaces. Salts are much less compatible with oily films than organic abrasives, such as colophony. The material eventually coats the separated rubber fragments with a layer of crystalline powder, which produces a physical barrier between individual rubber particles. This barrier prevents any interaction between the polymer chains of different rubber particles and does not allow them to stick with each other.

Conventional salts can benefit the rubber devulcanization and size reduction utilizing the same mechanisms of shear increase and sticking inhibition. However, the most preferred Anti-Stick additives are ashless crystals, primarily ammonium and hydrazonium salts and complexes. Crystals of these salts are sufficiently hard at ambient conditions, but with some heating many of them easily degrade, e.g. ammonium hydrocarbonate and ammonium sulfite decompose at 42°C and 65°C respectively. Therefore, when used in rubber manufacture, these additives do not introduce a significant amount of new chemical functionalities. Also, ash content is an important parameter of reclaim rubber, therefore, addition of ash producing salts would reduce the value of the product. Ammonium hydrocarbonate is a particularly effective ashless salt due to the buildup of relatively hard crystals at ambient conditions and its ability to easily decompose into NH₃, CO₂ and H₂O with increasing temperature. Hydrazonium sulfate also produces the necessary crystal morphology with ashless constitution. Several varieties of ammonium salts with phosphoric acid can also be employed, as can be ammonium sulfates, sulfites and similar.

It is preferred that the devulcanizing agent employs two types of components because of the synergy between Reactant and Anti-Stick additives. Nevertheless, in some instances only one component is sufficient, when the Reactant itself is able to form hard crystals. Acetamide crystals appear relatively hard and show an ability to inhibit the particle sticking. Consequently, the presence of acetamide alone is sufficient to lead to excellent devulcanizing performance when mixed with waste rubber.

The ratio of Reactant : Anti-Stick additives can be varied between 5:1 to 1:5 to determine the best conditions for the devulcanization. Harder raw material might require larger proportion of Anti-Stick additives in order to penetrate the polymer matrix, as in case of high mileage tire buffings. Increased levels of degradation inhibitors in the waste rubber might require larger portion of Reactant additives, as in case of tire sidewalls. Supplemental additives might be also useful, such as pre-vulcanization inhibitors, organic abrasives or rubber conditioners. The treat rates of the whole devulcanizing agent can be selected from the range of 1% to 8% weight per amount of recycled rubber. Devulcanizing agent concentrations may vary even more when used for other elastomers.

### DESCRIPTION OF EXAMPLES

A series of examples is provided below to demonstrate the advantages of rubber processing with aforementioned devulcanizing agent. Compositional properties of the source rubber were initially determined, as listed in Table 1:

**Table 1**

| Composition of source rubber used for devulcanization and production of Reclaim Rubber Powder (RRP) as used in Examples | | |
|---|---|---|
| Properties | Test methods | Car buffings |
| | | |
| Ratio of Isoprene to SBR rubber | ISO 7270 (pyro-GC), ISO 4650 (FTIR) | 40:60 w/w |
| Rubber content | TGA | 50.1% wt. |
| Organic additives | TGA | 12.7% wt. |
| Carbon black | TGA | 23.8% wt. |
| Mineral substances | TGA | 13.4% wt. |
| Total sulfur | AA | 1.8% wt. |
| Ash at 550°C | ISO 247 | 15.3% wt. |
| Particles larger than 2 mm | 10 Mesh sieves | 31% wt. |
| Particles finer than 0.9 mm | 20 Mesh sieves | 36% wt. |

The incoming buffings were mixed with the devulcanizing agent and processed in a mechanical shear device until the relatively coarse particles were converted into a visibly uniform rubber powder. Produced reclaim rubber powders were sieved through 10 Mesh in order to remove accidental contaminants. Same sieving was performed with incoming buffings in order to use them for blending the control formulations. Without the use of any devulcanizing agent the buffings could not be converted into powder in this equipment. Instead of progressively finer particles, compressed sponge-like sheets of rubber were produced during the early stages of mechanical shear. Subsequent processing of the buffings without any devulcanizing agent eventually leads to rubber sticking to the equipment surfaces and stalling the operation. Poorly performing devulcanizing agents or their low concentrations also lead to lumping of the buffings, output of compressed rubber sheets and eventual sticking, which forced the termination of the processing.

In order to study the suitability of the produced reclaim rubber powder for recycling into rubber articles, test formulations were prepared. Passenger car tread buffings were selected as the source of waste rubber. They were processed as described above with several devulcanizing agents in order to obtain the reclaim rubber powder. Then this product was mixed at 10% or 20% treat rates with the base formulation, which contained natural rubber, carbon black, sulfur and other conventional rubber additives as shown in Table 2. The base formulation was prepared beforehand by mixing on a roll mill until uniform.

**Table 2**

| Composition of the base formulation for subsequent testing of reclaim rubber powder | | |
|---|---|---|
| Additive | Industrial name | Amount in base formulation |
| Natural Rubber | NR-65 | 55.5% |
| Carbon Black | N-330 | 33.3% |
| Plasticizer | I-20A naphthenic oil | 5.54% |
| Catalyst | ZnO | 1.66% |
| Release agent | Stearic acid | 1.10% |
| Sulfur | S | 1.00% |
| Accelerator | CBS | 0.67% |
| Antioxidant | TMQ | 0.55% |
| Antiozonant | IPPD | 0.42% |
| Pre-vulcanization inhibitor | TMTD | 0.11% |

Then 10% or 20% of devulcanized reclaim rubber powders (or unprocessed buffings for control formulations) were sieved through 10 Mesh to remove accidental contaminants and mixed with the base formulation using a conventional procedure of 20 passes. Produced slabs were placed into a vulcanization press at 160°C and 0.5 MPa for 20 minutes, as demonstrated in Examples. Cured rubber specimens were cut and their technical parameters measured, such as Shore A hardness, elasticity and other properties. Addition of the recycled rubber made the specimens softer. However, compared to the specimens made with 10% or 20% of unprocessed buffings, Shore hardness decreased in a similar manner independently of devulcanization. Elasticity became somewhat lower, but not very significantly. The same tendency was observed with residual elongation, which became lower with addition of recycled rubber. Changes in tensile strength and % elongation at break were the most critical and the effects of devulcanization were the most obvious for these parameters, as demonstrated in Table 3.

A series of examples is provided below to show the effects of particular chemicals on devulcanization of rubber and its suitability for utilization in new rubber formulations.

### Example 1

Passenger car tread buffings were sieved through 10 Mesh to remove larger pieces, metal wires and accidental contaminants. Approx. 70% of original buffings were able to pass through the sieves. The finer fraction was mixed with the base formulation (Table 2) at 10% and 20% wt. on a roll mill to produce two rubbery sheets. The base formulation without any buffings represented the third sheet. All three sheets were transferred to the vulcanization press for curing at 150°C and 1.0 MPa for 20 minutes. The specimens were cut from the sheets and stored for 2 hrs or longer before the measurements. Determined properties are listed in Table 3. The results show that tensile strength and ability to withstand elongation become at least 20% poorer, as compared to the base formulation.

**Table 3**

| Properties of rubber specimens, produced using at 10% and 20% treat rates of unprocessed buffings (Example 1) or Reclaim Rubber Powder (RRP), obtained by processing tread buffings with the devulcanizing agent (as described in Examples 2-5): | | | | | |
|---|---|---|---|---|---|
| | Hardness | Tensile strength | Elongation at break | Residual elongation | Elasticity |
| | Shore A | MPa | % | % | % |
| Base formulation (w/o RRP or buffings) | 67 | 19.6 | 453 | 18 | 34 |
| 10% buffings (Ex. 1) | 67 | 15.6 | 383 | 12 | 32 |
| 20% buffings (Ex. 1) | 66 | 12.8 | 343 | 10 | 30 |
| 10% RRP (Ex. 2) | 69 | 18 | 410 | 16 | 32 |
| 20% RRP (Ex. 2) | 65 | 15.9 | 378 | 16 | 30 |
| 10% RRP (Ex. 3) | 69 | 15.7 | 360 | 15 | 34 |
| 20% RRP (Ex. 3) | 64 | 15.3 | 358 | 13 | 32 |
| 10% RRP (Ex. 4) | 67 | 16.9 | 395 | 15 | 33 |
| 20% RRP (Ex. 4) | 65 | 15.7 | 375 | 12 | 32 |
| 10% RRP (Ex. 5) | 65 | 16.4 | 395 | 16 | 31 |
| 20% RRP (Ex. 5) | 63 | 14.5 | 370 | 13 | 28 |

### Example 2

Passenger car tread buffings (1 kg) were mixed with ground powders of 20 g acetamide, 10 g glycine and 10 g ammonium hydrocarbonate until evenly dispersed. The blend was poured into a mechanical shear device and processed until a fine uniform powder was obtained. The reclaim rubber powder was sieved and mixed with the base formulation at 10% and 20% to produce two sheets, which were cured and tested as described in Ex. 1. Determined properties are listed in Table 3. The results show that the deterioration of tensile strength and ability to withstand elongation was about 3 times lower than in the case of unprocessed buffings (Ex. 1). This demonstrates that properties of the recycled rubber powder are significantly closer to those of non-vulcanized rubber compared to the buffings.

### Example 3

Passenger car tread buffings (1 kg) were mixed with ground powders of 40 g glycine and 20 g hydrazonium sulfate until evenly dispersed. The blend was poured onto a mechanical shear device and processed until a fine uniform powder was obtained. The reclaim rubber powder was sieved and mixed with the base formulation at 10% and 20% to produce two sheets, which were cured and tested as described in Ex. 1. Determined properties are listed in Table 3. The results show that the deterioration of tensile strength and ability to withstand elongation at 10% treat rate was similar to those of unprocessed buffings (Ex. 1). However, at 20% treat rate the reclaim rubber powder performed clearly better than the unprocessed buffings. This demonstrates that the devulcanizing agent made the reclaim rubber powder more similar to non-vulcanized rubber compared to the buffings.

### Example 4

Passenger car tread buffings (1 kg) were mixed with ground powders of 60 g acetamide until evenly dispersed. The blend was poured onto a mechanical shear device and processed until a fine uniform powder was obtained. The reclaim rubber powder was sieved and mixed with the base formulation at 10% and 20% to produce two sheets, which were cured and tested as described in Ex. 1. Determined properties are listed in Table 3. The results show that the deterioration of tensile strength and ability to withstand elongation was about two times lower than in the case of unprocessed buffings (Ex. 1). This demonstrates that properties of the recycled rubber powder are significantly closer to those of non-vulcanized rubber compared to the buffings.

### Example 5

Passenger car tread buffings (1 kg) were mixed with ground powders of 40 g isocyanuric acid and 20 g ammonium sulfate until evenly dispersed. The blend was poured onto a mechanical shear device and processed until a fine uniform powder was obtained. The reclaim rubber powder was sieved and mixed with the base formulation at 10% and 20% to produce two sheets, which were cured and tested as described in Ex. 1. Determined properties are listed in Table 3. The results show that the deterioration of tensile strength and ability to withstand elongation was about two times lower than in the case of unprocessed buffings (Ex. 1). This demonstrates that properties of the recycled rubber powder are significantly closer to those of non-vulcanized rubber compared to the buffings.

Having the benefit of this disclosure, those skilled in art can readily identify the main advantages of the devulcanizing agent. The main objective of this invention is the improvement in recycling and utilization of waste rubber. The improved quality of produced reclaim rubber is demonstrated first of all by its granulometric properties. The rubber fragments, obtained during the processing, are immediately coated with ashless crystals, which inhibit lumping of the particles. Also, due to shear increase the size of reclaim particles is easily reduced to less than 0.5 mm. The obtained reclaim rubber powder is very fine and easily dispersible, as opposed to large solid pieces of virgin rubbers. When using such powder in batch manufacturing of rubber articles, this assures excellent dispersion with little mixing and heating, in comparison to reclaim sheets, slabs or bales, widespread in the industry. Consequently, when using the reclaim rubber powder in a new product formulation, the whole mixture of rubber and additives does not receive excessive thermal stress and demonstrates excellent homogeneity, which produces much better curing performance and significantly improves technical properties. Since Anti-Stick additives decompose easily with heating, their inclusion does not affect the performance of other rubber chemicals.

Another important advantage is energy savings and significant reduction in processing time. In a rubber manufacturing line often the limiting stage is the formulation mixing, where relatively long durations are needed to properly disperse virgin rubber or reclaim rubber bales. In addition to time consumption and high energy demands, this stage often requires precision mixers of high torque, which have high maintenance costs. If the raw material is supplier in powder form, rather than bulk solid, the blending stage can be streamlined with much less engineering or operational effort, which greatly reduces manufacturing costs.

Inorganic nature of some devulcanizing agent components inhibits formation of oily films in rubber particle sliding, while their crystals increase friction and provide more area for shear surfaces. This leads to another major advantage, which is the increased extent of devulcanization, achieved by the synergy between tribologic effects and Reactant additive penetration / diffusion. Better control of tribologic conditions not only improves the reclaim granulometry during manufacturing, but also leads to dynamic deformational tensions and polymer chain stresses. This generates more strain in polymer crosslinks, making S-S and S-C bonds more vulnerable to delocalization. Dynamic deformation of polymer matrix also allows Reactant molecules to penetrate into rubber more rapidly, increasing the rate of diffusion. Consequently, S-S and S-C bonds become more readily available to Reactant molecules and easily undergo delocalization. This leads to rupturing of crosslinks and formation of S-S and S-C bonds within the same polymer chain. Reactant compounds along with the residual additives can delocalize S-S and S-C bonds through free radical, organic cation, thermal rearrangement and acid-base reaction mechanisms, all of which are proven effective in rubber devulcanization. As a result, the reclaim rubber powder described in this embodiment is more suitable as natural rubber substituent due to improved tensile strength, elongation and other key parameters.

Yet more advantages come from the fact that both Reactant and Anti-Stick additives are ashless. First of all this reduces the side-effects of new chemical substances, introduced into new rubber formulation along with the reclaim rubber. Also, many manufacturers consider "ash content" as an important parameter for reclaim rubber. Due to extensive heating, conventional reclaim rubber has higher ash content than the source rubber used for its manufacture, especially if alkaline additives are used as devulcanizing agents. When the disclosed devulcanizing agent, which is 100% ashless, is used in waste rubber processing via described ambient mechanical shear method, the ash content does not increase, giving an advantage over conventionally produced reclaim rubber.

It must be noted that both Reactant and Anti-Stick additives can be manufactured from renewable resources, which improves the environmental sustainability of rubber products. Amino acids are widespread in nature, as are amides and other Reactant compounds. Some ashless salts in Anti-Stick compounds can be produced just from air, as in case of ammonium hydrocarbonate. Currently petrochemical technologies are also used in manufacturing the components of the aforementioned agent, nevertheless, biobased pathways can provide an alternative synthetic route. Biobased synthesis methods for the current state-of-the-art devulcanizing agents, such as dixylene disulfide or diphenyl urea, are not available to any viable extent yet. Inherent biodegradability of the devulcanizing agent also helps easier disposal of waste rubber, especially if a rubber article is accidentally dumped in landfill.

The reclaim rubber powder, produced utilizing the disclosed devulcanized agent, can be used in a wide variety of compositions in rubber and plastics industries. For tire manufacturing the ratio of the reclaim rubber powder can be as high as 30%. For manufacture of tiles, hoses, rubber mats, and other rubber-based non-tire items, the powder treat rate can be in excess of 60%. Being a relatively low cost equivalent of a virgin rubber mixture with carbon black in a form of easy-to-disperse particles, the reclaim rubber powder can also be used in formulating other plastics and elastomers, such as piping, construction articles, heavy duty paints, wood treatment, asphalt / concrete coatings and elsewhere.

## Claims

1. The devulcanizing agent for processing of waste rubber and other elastomers, **characterized by** comprising:
- component A selected from organic compounds, which contain carbonyl and amine or amide functional groups, such as amino acids, carbamates, isocyanurates, carboxylic acid amides and their derivatives, as well as mixtures thereof, whose molecules penetrate the rubber matrix and destabilize S-S and S-C bonds;
- component B selected from solid ashless inorganic salts of ammonium and hydrazonium as well as mixtures thereof to increase the shear between rubber polymers during the mechanical action in processing along with prevention of sticking between particles of fragmented rubber; and optionally
- supplemental additives, such as pre-vulcanization inhibitors, abrasives or antioxidants; wherein the ratio of components A and B in the agent is in the range from 5:1 to 1:5 parts by weight, preferably - in the range from 2:1 to 1:2 parts by weight.

2. The devulcanizing agent according to Claim 1, wherein it is in a form of granules, chips, powder, with or without some constituents in semisolid or liquid state.

3. The devulcanizing agent according to Claim 1, wherein its concentration in the waste rubber is in the range from 1% up to 8% w/w.

4. The devulcanizing agent according to Claim 1, wherein it contains a component A as acetamide, whose amount in the waste rubber belongs to the range of 1.5% w/w to 7% w/w with or without the component B.

5. Use of the devulcanizing agent according to Claims 1-4 for production of reclaim rubber in the form of powder.

## Patentansprüche

1. Devulkanisierungsmittel zur Verarbeitung von Abfallkautschuk und anderen Elastomeren, **dadurch gekennzeichnet, dass** es umfasst:
- Komponente A, die aus organischen Verbindungen ausgewählt ist, die Carbonyl- und Amin- oder Amid-funktionelle Gruppen, wie etwa Aminosäuren, Carbamate, Isocyanurate, Carbonsäureamide und deren Derivate sowie Mischungen davon enthalten, deren Moleküle in die Kautschukmatrix eindringen und S-S- und S-C-Bindungen destabilisieren;
- Komponente B, die aus festen aschefreien, anorganischen Salze von Ammonium und Hydrazonium sowie Mischungen davon ausgewählt ist, um zusammen mit der Verhinderung des Klebens zwischen Partikeln des fragmentierten Kautschuks die Scherung zwischen Kautschukpolymeren während der mechanischen Einwirkung bei der Verarbeitung zu erhöhen; und gegebenenfalls
- ergänzende Additive, wie etwa Vorvulkanisierungs-Inhibitoren, Schleifmittel oder Antioxidationsmittel; wobei das Verhältnis der Komponenten A und B in dem Mittel im Bereich von 5:1 bis 1:5 Gewichtsteilen liegt, vorzugsweise - im Bereich von 2:1 bis 1:2 Gewichtsteilen.

2. Devulkanisierungsmittel gemäß Anspruch 1, wobei es in einer Form von Granulaten, Spänen, Pulver, mit oder ohne einige Bestandteile im halbfesten oder flüssigen Zustand ist.

3. Devulkanisierungsmittel gemäß Anspruch 1, wobei seine Konzentration in dem Abfallkautschuk im Bereich von 1 Gew.-% bis zu 8 Gew.-% liegt.

4. Devulkanisierungsmittel gemäß Anspruch 1, wobei es eine Komponente A als Acetamid enthält, dessen Menge in dem Abfallkautschuk in dem Bereich von 1,5 Gew.-% bis 7 Gew.-% mit oder ohne die Komponente B liegt.

5. Verwendung des Devulkanisierungsmittels gemäß den Ansprüchen 1 - 4 zur Herstellung von Regenerat-Kautschuk in Form von Pulver.

## Revendications

1. Agent de régénération pour la transformation du déchet de caoutchouc et d'autres élastomères, **caractérisé en ce qu'**il comprend :
- le composant A choisi parmi les composés organiques, qui contiennent des groupements fonctionnels carbonyle et amine ou amide, tels que des acides aminés, des carbamates, des isocyanurates, des amides d'acide carboxylique et leurs dérivés, ainsi que des mélanges de ceux-ci, dont les molécules pénètrent dans la matrice caoutchouteuse et déstabilisent les liaisons S-S et S-C ;
- le composant B choisi parmi les sels inorganiques solides sans cendre d'ammonium et d'hydrazinium ainsi que les mélanges de ceux-ci, pour augmenter le cisaillement entre les polymères caoutchouteux pendant l'action mécanique lors de la transformation tout en prévenant l'adhérence entre les particules de caoutchouc fragmenté ; et facultativement
- des additifs supplémentaires, tels que des inhibiteurs de prévulcanisation, des abrasifs ou des antioxydants ; dans lequel le rapport des composants A et B dans l'agent se situe dans la gamme allant de 5:1 à 1:5 parties en poids, de préférence dans la gamme de 2:1 à 1:2 parties en poids.

2. Agent de régénération selon la revendication 1, lequel se trouve sous la forme de granules, de copeaux, de poudre, avec ou sans certains constituants à l'état semi-solide ou liquide.

3. Agent de régénération selon la revendication 1, dans lequel sa concentration dans le déchet de caoutchouc se situe dans la gamme allant de 1 % jusqu'à 8 % m/m.

4. Agent de régénération selon la revendication 1, lequel contient un composant A tel que l'acétamide, dont la quantité dans le déchet de caoutchouc se situe dans la gamme de 1,5 % m/m à 7 % m/m avec ou sans le composant B.

5. Utilisation de l'agent de régénération selon les revendications 1 à 4 pour la production de caoutchouc régénéré sous la forme de poudre.
